# EUROPEAN PATENT SPECIFICATION

(11) **EP 0 357 713 B1**
(45) Date of publication and mention of the grant of the patent: **02.03.1994**
(21) Application number: 89901976.4
(22) Date of filing: 28.11.1988
(51) Int. Cl.: G02B 27/46

(54) **OPTICAL THRESHOLDING APPARATUS AND METHOD**
OPTISCHE SCHWELLENWERTANORDNUNG UND METHODE
PROCEDE ET APPAREIL DE SEUILLAGE OPTIQUE

(30) Priority: 19.01.1988 US 145334
(43) Date of publication of application: 14.03.1990
(73) Proprietor: Hughes Aircraft Company, Los Angeles, California 90045-0066 (US)
(72) Inventor: SOFFER, Bernard, H., Pacific Palisades, CA 90272 (US); OWECHKO, Yuri, Newbury Park, CA 91320 (US)
(74) Representative: KUHNEN, WACKER & PARTNER
(86) International application number: US8804239
(87) International publication number: WO8906819

(56) References cited:
- EP-A- 0 153 147
- EP-A- 0 170 158
- EP-A- 0 190 383

## Description

### BACKGROUND OF THE INVENTION

### Field of the Invention

This invention relates to the characterization and processing of optical beams, and more particularly to a system and method for detecting and adaptively thresholding a two dimensional image or data pattern via a quasi-one-dimensional planar, positionally mapped intensity spectrum of a light beam for re-transformation to a two-dimensional thresholded output.

### Description of the Related Art

Optical computing and logic processing may be performed by using the optical intensities distributed across a light beam This may be accomplished by first converting the distribution of optical intensities to a positional mapping, and then operating upon the signal at each different position to perform the desired computing or processing. The meaning of "light" or "optical" as used throughout this specification is not limited to wavelengths of the visible range, but should be understood to encompass the entire electromagnetic spectrum of wavelengths including, for example, infrared.

A system which accomplishes the desired intensity-to-position mapping is described in U.S. Patent No. 4,351,589 to Pierre H. Chavel et al., assigned to Hughes Aircraft Company, the assignee of the present invention. The patent discloses the use of liquid crystals to produce variable gratings, which diffract incoming light by varying amounts depending upon the grating period. The optical intensities at the different locations in an input light beam control the grating period at corresponding locations in the liquid crystal media. The variable gratings convert the spatial intensity distribution of the input beam to a positional mapping of intensities, from which the desired computing and logic functions can be accomplished.

Other systems to accomplish the intensity-to-position mapping are disclosed in U.S. Patent Application Serial No. 879,719, "Optical Intensity-To-Position Mapping Apparatus and Method" by Bernard Soffer and U.S. Patent Application Serial No. 900,053, "Light Deflector Apparatus and Method" by Yuri Owechko, both applications being assigned to Hughes Aircraft Company, the assignee of the present invention. Messrs. Soffer and Owechko are also the inventors of the present invention. Their prior systems disclose methods of using diffraction principles different from the variable grating-based system disclosed in the Chavel et al. patent. By varying the refractive indices of an array of small, variable refraction modules provided to receive an input light beam with optical intensities that vary as a function of position with the beam, the input optical intensities are mapped onto an array of optical output directions from the modules.

With any of the above-referenced systems, the mapping process yields a number of discrete spots, the intensity of each spot corresponds to the number of pixels in the input light beam which have an optical intensity corresponding to the position of said spot. This representation is called a histogram.

Once a histogram has been obtained, it may be used as a thresholding mechanism for blocking portions of the original beam which fail to exceed a given threshold, such as a predetermined multiple of standard deviations or variances of the original optical beam intensity distribution. The predetermined multiple can also be time-varying, and is selected to provide the intensity threshold desired. Histogram processing on serial electronic computers is relatively slow because all of the pixels in the input image must be processed for each histogram bin.

Another optical processing method created by Hughes Aircraft Company, the assignee of the present invention, utilizes a phase-conjugate resonator configuration. The phase conjugate resonator provides for the non-mixing of transverse modes, thereby allowing spatially disparate regions to reach the threshold of oscillation independently. This method uses a fixed, rather than variable, threshold and is still subject to noise.

### SUMMARY OF THE INVENTION

In view of the above problems, the primary purpose of the present invention is to provide an apparatus and method for detecting and adaptively thresholding a positionally-mapped, one-dimensional intensity spectrum of a light beam for re-transformation to a two-dimensional thresholded output, with a faster response time than previously available.

Another goal of the present invention is to provide distribution and standard deviation information concerning the original optical beam, and thus allow accurate thresholding at a predetermined desired intensity level. A time-variable threshold which permits uniform thresholding of the input light beam is also desired.

A further goal is the provision of such a method and apparatus which are capable of selectively passing desired signals in the presence of background noise.

In accordance with the invention, the positionally mapped histogram beam is operated upon to yield a thresholded histogram beam. The thresholded beam excludes those portions of the original histogram beam which are on one side of the position threshold. The thresholded histogram beam is then converted back to the original input beam format, with beam intensities below a level corresponding to the histogram position threshold removed. The position threshold is determined by analyzing the histogram beam to determine the intensity distribution of the original beam, determining certain mathematical parameters of that original beam such as the mean and variance of the intensity level, calculating a desired intensity threshold level from said parameters, and converting the intensity threshold to an equivalent positional threshold for the histogram beam.

A preferred embodiment employs an optical beam splitter to split a positionally-mapped optical beam between a detector array and an electronically addressed spatial light modulator or light valve such as a charge-coupled device liquid crystal light valve (CCD LCLV). The detector array detects the one-dimensional histogram and converts the optical input into equivalent electronic signals. These signals are fed to a microprocessor which determines the original optical beam intensity distribution and calculates the mean and variance (square of the standard deviation) therefrom. Using this information, the computer sets the intensity threshold level at a predetermined multiple of the variance, transforms this level into a threshold histogram positional level, and forwards this information to the CCD LCLV. The threshold is applied to the optical histogram by controlling the CCD LCLV to reflect only those histogram beam positions which exceed the threshold. With the present invention the desired threshold intensity can be time varying as well as fixed. Furthermore, a threshold intensity may be selected which blocks background noise.

These and other features and advantages of the invention will be apparent to those skilled in the art from the following detailed description of a preferred embodiment, taken together with the accompanying drawings, in which:

### DESCRIPTION OF THE DRAWINGS

FIG. 1 is a block diagram illustrating one application for the present invention;
FIG. 2 is a perspective view of a prior intensity-to-position mapping system illustrating the generation of a histogram for use by the present invention;
FIGs. 3A and 3B are respectively an illustration of a quasi-one-dimensional histogram (distribution function) of optical intensities, including spatial Fourier transform components, and a graph illustrating the same;
FIG. 4 is a block diagram of a preferred embodiment of the invention;
FIG. 5 is a graph providing an example of threshold information which may be determined by the invention; and
FIG. 6 is a graph depicting an example of the input/output light intensity characteristic of a CCD LCLV which forms part of the invention.

### DETAILED DESCRIPTION OF A PREFERRED EMBODIMENT

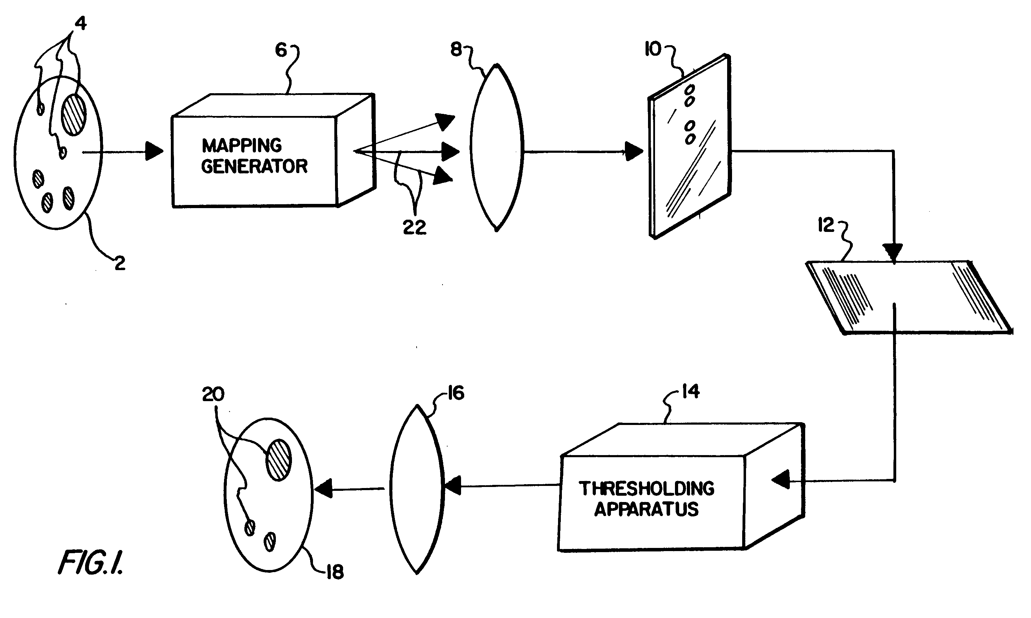

The present invention makes use of optical diffraction principles and a computer processor to produce an optical histogram beam with a thresholded positional distribution within the beam, which is ready to be retransformed back into a two-dimensional optical output with an equivalent intensity threshold. FIG. 1 illustrates how the present invention functions to provide an adaptively thresholded output in which background noise and other undesirable optical intensities are removed. An original input optical beam 2 is shown with a two-dimensional cross-section characterized by a spatial distribution of optical frequencies and intensities; areas of different intensity are identified by reference numeral 4. The beam is inputted to a mapping generator 6, which converts the intensity distribution to an equivalent directional distribution.

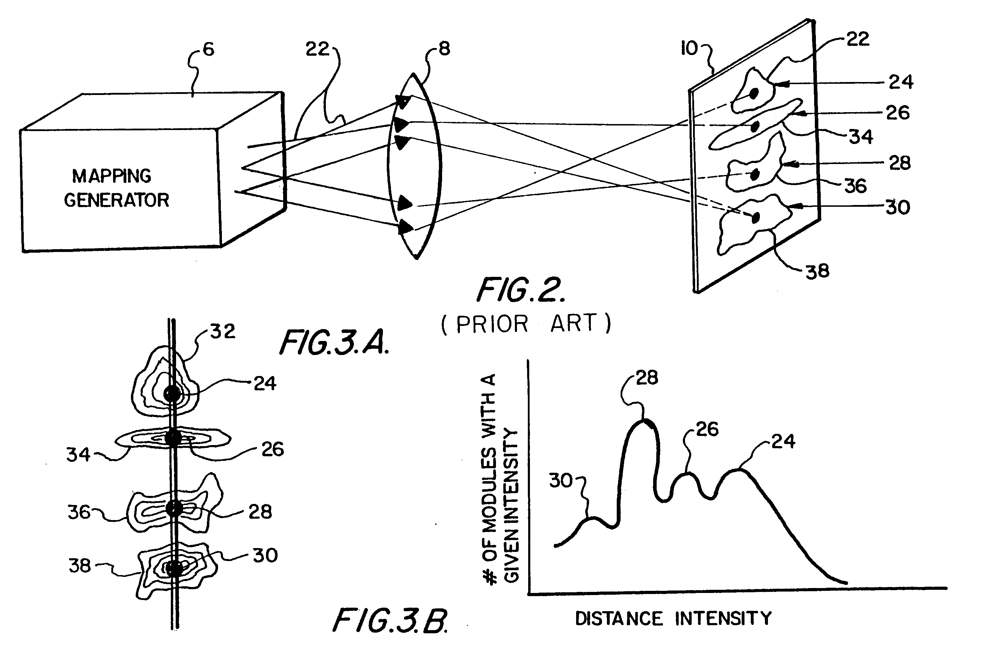

The operation of mapping generator 6 is illustrated in FIG. 2. The mapping generator converts original optical beam 2 into a set of beams 22 which are directed onto a Fourier transform lens 8. Mapping generator 6 can employ any of the methods discussed previously, such as electro-optic prismatic deflection or variable grating deflection, for converting an intensity distribution to an equivalent directional distribution. Generally speaking, mapping generator 6 sorts the pixels of optical beam 2 according to their intensity, and into an array of output beams 22 in which each beam 22 corresponds to one of the pixels of input beam 2. The angular directions of output beams 22 vary in accordance with the optical intensities of their corresponding input pixels, higher intensities produce greater angles, lower intensities produce lesser angles, and equal intensities produce parallel beams. Fourier transform lens 8 maps the beams 22 onto the histogram plane 10. The positions of the beams on plane 10 correspond to their angular directions, and thereby to the optical intensities of their corresponding pixels in input beam 2.

It should be noted that position along the histogram plane indicates intensity level in the original optical beam 2, while intensity at any given point on the histogram plane indicates the number of pixels in the original beam 2 with an intensity corresponding to that histogram position. The lens 8 focuses all beams 22 which correspond to like optical intensities in beam 2, regardless of their position in beam 2, onto the same location in histogram plane 10. Therefore, the histogram position distribution corresponds to the original optical beam intensity distribution.

For purposes of illustration, only four separate intensity positions 24, 26, 28 and 30 are shown in FIG. 2. Each of these intensity positions have attendant Fourier spectrum space locations 32, 34, 36 and 38, respectively, mapped with them in a linear array. Accordingly, histogram plane 10 may be considered as a quasi-one-dimensional positional representation of the intensity distribution function for the original input beam 2. For the intensities to map exactly, the histogram plane 10 should be one focal length beyond the Fourier transform lens 8. This optical mapping is done in real time.

Returning now to FIG. 1, the optical beam mapped onto histogram plane 10 is passed through an optional one-dimensional neutral density filter 12. Filter 12 is linearly graded and is used in a conventional manner to restore grey scale. From filter 12 the beam is operated upon by the thresholding apparatus 14 of the present invention, which thresholds and ultimately deflects the beam onto a conventional inverse Fourier transform lens 16. Since the elements of optical histogram 10 contain complex Fourier (side band) information, including phase, which discloses their particular locations in the input beam 2, the simple inverse optical Fourier transform lens 16 produces a filtered, or thresholded, two-dimensional output beam pattern 18 which includes only those optical intensities 20, with their corresponding locations in the beam, which are above a desired threshold intensity.

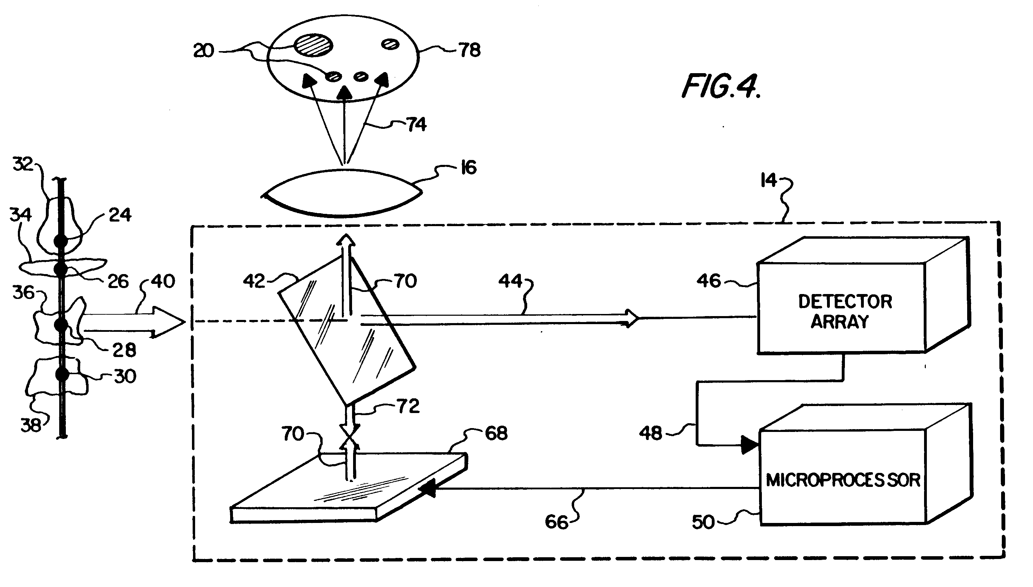

FIG. 3A depicts the quasi-one-dimensional optical intensity distribution function, or histogram, of FIG. 2. In this drawing the contours of the spatial Fourier transform components can be seen. As shown, position location 24 is furthest from the center of the histogram and therefore represents the strongest original beam 2 intensity, position location 26 is somewhat closer to the center but still represents a relatively strong intensity, position location 28 represents a relatively weak intensity, and position location 30 represents the weakest intensity. FIG. 3B translates the histogram of FIG. 3A into a Fourier transform function graph, with each of the histogram positions graphed as a function of the number of times its corresponding intensity appears in the input optical beam.

FIG. 4 illustrates a preferred embodiment of the thresholding apparatus, shown within dashed box 14. The histogram of FIG. 3A is transmitted as a quasi-one-dimensional light beam 40. Beam 40 is directed onto a beam splitter 42 which splits the input histogram beam 40 into sub-beams 44 and 72 which are directed onto a detector array 46 and a CCD LCLV 68, respectively.

CCD LCLVs have applications mainly in optical data processing as an electronically-addressed optical light modulator for spectrum analysis, image correction, radar, and spread-spectrum signal processing. The general structure and operation of such devices is described in an article by Uzi Efron et al., "Silicon Liquid Crystal Light Valves: Status and Issues", Optical Engineering, Vol. 22, No.6, Nov./Dec. 1983, pages 682-686. Detector array 46 is commercially available from various manufacturers such as RCA and Sony. It is a segmented array composed of numerous pixels. The array detects the quasi-one-dimensional split beam 44, and produces electrical signals 48 representing the spatial and intensity distribution of beam 44 which are proportional in electrical intensity to the optical intensities detected. These electronic signals are in turn fed to a microprocessor 50.

Various commercially available microprocessors may be used to perform the algebraic functions required by the present invention. The preferred device is a chip containing a microprocessor with directed capabilities and user access necessary to adjust the desired threshold information used by the microprocessor in its calculations. The microprocessor 50 could employ a circuit ROM, or be operated by a software program, to enable it to read the incoming electronic signals 48, calculate the algebraic mean and variance of the intensity distribution of the original beam, and calculate a threshold level based on user-inputted parameters. The desired intensity threshold is typically expressed as a given multiple of the variance of the intensity distribution, but other mathematical parameters could also be used. Microprocessor 50 is programmed to convert the intensity threshold to an equivalent generalized Fourier transform space positional threshold consistent with the histogram format. It produces a position-based threshold voltage signal, and sends this signal along line 66 to the CCD LCLV 68. The signal is a single electrical voltage value, although it may be time-varying in value if the microprocessor is user-inputted with a time-varying threshold intensity level.

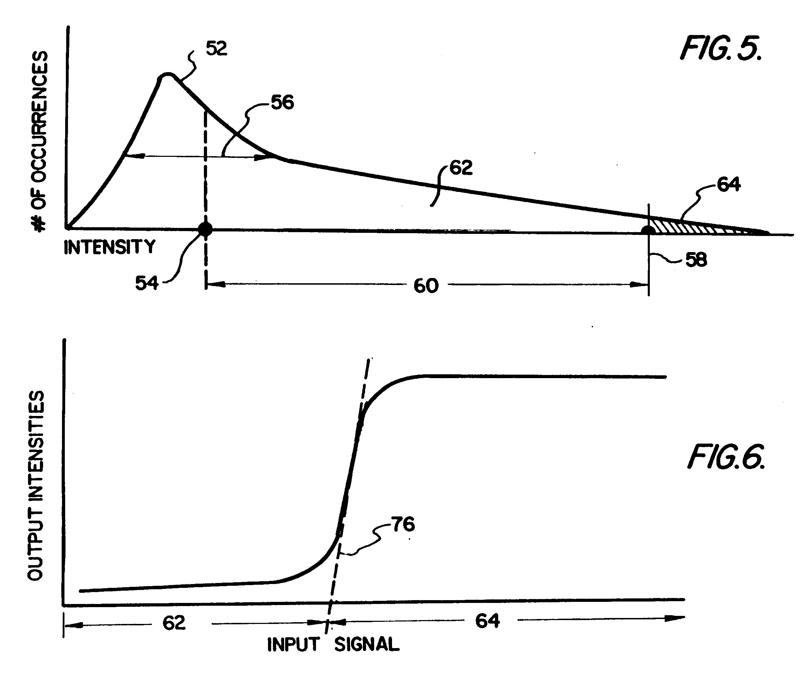

FIG. 5 depicts a possible intensity distribution function or histogram, with intensity in the original beam 2 shown on the horizontal axis and the vertical axis indicating the number of times any particular intensity appeared in the original beam, regardless of position. Microprocessor 50 calculates the mean intensity value 54 and the variance 56. Microprocessor 50 then establishes the desired intensity threshold level 58, which is a predetermined multiple of variances 60. For the example shown, the desired intensity threshold level 58 occurs at 3 variances above average intensity value 54. The desired intensity threshold level could be any arbitrary multiple of the variance, and could be established either from the average intensity value 54 or from any other intensity value desired. For the desired intensity threshold level 58, it determines those intensities 62 which are below the threshold and will be blocked, while intensities 64 which exceed the threshold are transmitted. From the intensity threshold for the original input beam 2, the microprocessor calculates an equivalent positional threshold for the histogram beam, and it is the latter signal which is delivered over microprocessor output line 66. The blocking/transmission mechanism is explained immediately below.

Returning to FIG. 4, the electrical signal on line 66 addresses CCD LCLV 68 to optically reflect only those histogram beam positions which exceed the positional threshold and thus correspond to input beam intensities exceeding the desired threshold intensity level e.g., intensities 64 of FIG. 5. A CCD LCLV's reflectivity is based on an input/output light intensity characteristic such as that shown in FIG. 6. This characteristic shows the threshold 76 implemented by a CCD LCLV. Since a CCD LCLV is a spatial light modulator, its reflectivity is governed by the voltage applied across it. As the voltage varies, the position of the threshold 76 shifts to accommodate the voltage change. Thus, split beam 72 strikes CCD LCLV 68 with the complete histogram from beam splitter 42, but only that portion of the beam which is positioned further from the beam center than the position threshold is reflected as a positionally thresholded beam 70. Reflected thresholded beam 70 passes through beam splitter 42 and continues to the inverse Fourier transform focusing lens 16. Lens 16 re-transforms the positionally-thresholded one-dimensional beam into an intensity-thresholded two-dimensional output 74 which includes only those optical intensities of the input beam 2 which exceed the intensity threshold level. The positions of such intensities in the original beam 2 are restored through the preservation of the spatial Fourier transform components, including phase, in the histogram. Thus, by thresholding the optical intensities in this manner most, if not all, background noise can be eliminated. This provides not only a more accurate and uniform light beam to improve optical computing and logic processing, but also a faster response time.

While a specific embodiment of the invention has been shown and described, it should be understood that numerous variations and alternate embodiments will occur to those skilled in the art. For example, a transmissive LCLV might be used instead of a reflective device, and mechanisms might be devised for both detecting the positional spectrum of the histogram beam and imposing a corresponding threshold upon that beam without having to split it. Accordingly, it is intended that the invention be limited only in terms of the appended claims.

## Claims

1. An optical thresholding apparatus for thresholding optical beam intensities so as to block out some intensities and pass others within a histogram light beam (40,44,72) which is derived by a one dimensional transform from an original beam having different intensity levels in different unit areas of its cross section, the histogram light beam (40,44,72) having a cross-sectional intensity distribution in which the position is representative of an intensity level in the original optical beam and in which the intensity at a given position corresponds to the number of unit areas in the original beam having the same intensity level, the apparatus comprising:
means for splitting the histogram beam (40) into first and second beams (44,72);
an optical beam detector (46) for receiving said first beam (44) and generating therefrom electrical signals proportional to the optical positional intensities of said first beam;
processing means (50) receiving said electrical signals to
- determine therefrom the original optical beam intensity distribution,
- calculate a desired intensity threshold level for said determined intensity distribution based on predetermined parameters,
- transform said desired intensity treshold into the corresponding positional threshold for the histogram beam, and
- generate a threshold-specified output signal representing said positional threshold;
electro-optical processing means (68) connected to said processing means (50), said electro-optical processing means (68) being arranged to receive said second beam (72) and reflecting said second beam (72) in response to said threshold-specified output signal to an output beam (70) in which only those histogram beam positions corresponding to the original optical beam intensity distribution which are greater than the threshold positional level are reflected, and wherein all other histogram positions are blocked.

2. The optical thresholding apparatus of claim 1, wherein the electro-optical processing means is a light valve (68) which is governed by the threshold specified output signal from the sensing means (14, 46, 50) to output only those histogram beam positions which correspond to the original optical beam intensities exceeding said threshold intensity (58, 64).

3. The optical thresholding apparatus of claim 1, wherein said sensing means (14, 46, 50) comprises the combination of a detector (4b) which detects a portion of the histogram beam (44) and generates signals (48) representing the positional distribution of said beam, and a signal processing means (50) connected to receive said generated signals (48) and to establish therefrom said positional threshold.

4. The optical thresholding apparatus of claim 3, wherein said signal processing means (50) comprises a computer.

5. The optical threshold apparatus of claim 2, wherein said light valve (68) comprises a charge-coupled device liquid crystal light valve.

6. The apparatus of claim 1 further comprising means for generating the histogram light beam, wherein said means includes:
means for transforming the input beam (2) into a histogram beam (40), having a positional distribution which corresponds to the intensity histogram distribution of the input beam (2).

7. The apparatus of claim 6, said means for transforming the input beam (2) into a histogram beam (40) comprising an intensity-to-angle mapping generator (6) and a Fourier transform lens (8), said apparatus further comprising means for transforming said thresholded histogram beam into an output beam having substantially the spatial intensity distributions of the input beam subject to said desired threshold intensity level (58, 64).

8. The optical thresholding apparatus of claim 3 further comprising :
means for splitting the histogram beam (40) into first and second beams (44, 72) which retain the positional distribution of the histogram beam (40).

9. The optical thresholding apparatus of claim 8, wherein the signal processing means determines the desired intensity threshold level from the signals received from said detector (46) by generating the original optical beam intensity distribution therefrom, calculating the algebraic mean and variance of said intensity distribution, setting the desired threshold intensity level at a predetermined multiple of variances, transforming said desired intensity threshold to a corresponding positional threshold in the histogram beam, and generating a threshold specified output signal representing said positional threshold.

10. The optical thresholding apparatus of claim 8, wherein said means for splitting comprises a beam splitter (42) positioned to split the histogram beam (40) into first and second split beams (44, 72).

11. The optical threshold apparatus of one of the previous claims further comprising lens (16) for re-transforming the positionally thresholded output beam (70) to an intensity-thresholded two-dimensional output beam (74).

12. A method for thresholding optical beam intensities so as to block some intensities and pass others within a histogram light beam (40, 44, 72), which is derived by a one dimensional transform from an original beam having different intensity levels in different unit areas of its cross section, the histogram light beam (40,44,72) having a cross-sectional intensity distribution in which the position is representative of an intensity level in the original optical beam and in which the intensity at a given position corresponds to the number of unit areas in the original beam having the same intensity level, comprising the steps of:
splitting said histogram beam (40) into first and second beams (44, 72);
directing said first beam (44) to an optical beam detector (46) and said second beam (44) to an optical reflector (68);
detecting said first beam (44) and generating therefrom a series of electrical signals with elecrical intensities directly proportional to the optical position intensities of said first beam (44) to be fed to a signal processor (50);
processing said series of electrical signals to determine therefrom the original optical beam intensity distribution, calculating a desired intensity threshold level from said intensity distribution based on predetermined parameters, transforming said desired intensity threshold to a corresponding positional threshold in the histogram beam, and generating a threshold-specified output signal representing said positional threshold; and
optically reflecting said second beam (72), and adjusting said optical reflection in response to the electrical signal received from the signal processor (50) to reflect only those histogram beam positions corresponding to the original optical beam intensity distribution which are greater than the threshold positional level, and to block all other histogram positions

13. The method of claim 12, wherein light reflected from the optical reflector passes through the beam splitter (42) essentially unchanged and continues onto a focusing lens (16).

14. The method of claim 12, wherein the intensity threshold level is determined during the signal processing step by multiplying a pre-set real number variable with the calculated variance and adding the product to a pre-set starting position variable.

15. The method of claim 14, wherein said starting position variable is a designated level of the intensity distribution.

16. The method of claim 15, wherein the threshold intensity level and pre-set real number are both time-varying.

## Patentansprüche

1. Optische Schwellenverarbeitungsvorrichtung zum Erzeugen einer Schwelle für optische Strahlintensitäten, um einige Intensitäten innerhalb eines Histogrammlichtstrahls (40, 44, 72) auszublocken und wieder andere durchzulassen, wobei der Histogrammlichtstrahl durch eine eindimensionale Transformierung aus einem ursprünglichen Strahl erhalten wird, welcher in unterschiedlichen Bereichen seines Querschnitts unterschiedliche Intensitätsniveaus aufweist, und der Histogrammlichtstrahl (40, 44, 72) eine Querschnittintensitätsverteilung aufweist, in welcher die Position repräsentativ ist für ein Intensitätsniveau im ursprünglichen optischen Strahl, und in welcher die Intensität an einer gegebenen Position der Anzahl von Einheitsbereichen im ursprünglichen Strahl mit dem gleichen Intensitätsniveau entspricht, wobei die Vorrichtung aufweist:
ein Mittel zum Aufsplitten des Histogrammstrahls (40) in erste und zweite Strahlen (44, 72);
einen optischen Strahldetektor (46) zum Empfangen des ersten Strahls (44) und zum Erzeugen von elektrischen Signalen daraus, welche proportional zu den optischen Positionsintensitäten des ersten Strahls sind;
ein Verarbeitungsmittel (50) zum Empfangen der elektrischen Signale, um
- daraus die Intensitätsverteilung des ursprünglichen optischen Strahls zu bestimmen,
- basierend auf vorbestimmten Parametern ein gewünschtes Intensitätsschwellenniveau für die bestimmte Intensitätsverteilung zu errechnen,
- die gewünschte Intensitätsschwelle in die entsprechende positionale Schwelle für den Histogrammstrahl umzuwandeln, und
- ein schwellenspezifiziertes Ausgangssignal zu erzeugen, welches die positionale Schwelle darstellt;
ein elektro-optisches Verarbeitungsmittel (68), welches mit dem Verarbeitungsmittel (50) verbunden ist, wobei das elektro-optische Verarbeitungsmittel (68) derart angeordnet ist, daß es den zweiten Strahl (72) empfängt und den zweiten Strahl (72) als Reaktion auf das schwellenspezifizierte Ausgangssignal an einen Ausgangsstrahl (70) reflektiert wird, in dem nur diejenigen der Intensitätsverteilung des ursprünglichen Histogrammpositionen entsprechenden Histogrammstrahlpositionen reflektiert werden, welche größer sind als das Schwellenpositionsniveau, und alle anderen Histogrammpositionen blockiert werden.

2. Optische Schwellenverarbeitungsvorrichtung nach Anspruch 1, wobei das elektro-optische Verarbeitungsmittel ein Lichtventil (68) ist, welches von dem schwellenspezifizierten Ausgangssignal von dem Erfassungsmittel (14, 46, 50) geregelt ist, um nur diejenigen Histogrammstrahlpositionen auszugeben, welche den Intensitäten des ursprünglichen optischen Strahls entsprechen, welche die Schwellenintensität (58, 64) übersteigen.

3. Optische Schwellenverarbeitungsvorrichtung nach Anspruch 1, wobei das Erfassungsmittel (14, 46, 50) die Kombination aus einem Detektor (4b), welcher einen Abschnmitt des Histogrammstrahls (44) erfaßt und die positionale Verteilung des Strahls darstellende Signale (48) erzeugt, sowie einem Signalverarbeitungsmittel (50) aufweist, welches so angeschlossen ist, daß es die erzeugten Signale (48) empfängt und daraus die positionale Schwelle herstellt.

4. Optische Schwellenverarbeitungsvorrichtung nach Anspruch 3, wobei das Signalverarbeitungsmittel (50) einen Computer aufweist.

5. Optische Schwellenverarbeitungsvorrichtung nach Anspruch 2, wobei das Lichtventil (68) ein CCD-Flüssigkristallichtventil aufweist.

6. Vorrichtung nach Anspruch 1, welche des weiteren ein Mittel zum Erzeugen des Histogrammlichtstrahls aufweist, wobei das Mittel umfaßt:
ein Mittel zum Umformen des Eingangsstrahls (2) in einen Histogrammstrahl (40), welcher eine positionale Verteilung aufweist, die der Intensitätshistogrammverteilung des Eingangsstrahls (2) entspricht.

7. Vorrichtung nach Anspruch 6, wobei das Mittel zum Umformen des Eingangsstrahls (2) in einen Histogrammstrahl (4) einen Intensitäts-zu-Winkel-Abbildungs-Generator (6) und eine Fourier-Umwandlungslinse (8) aufweist, wobei die Vorrichtung des weiteren ein Mittel zum Umformen des mit einer Schwelle versehenen Histogrammstrahls in einen Ausgangsstrahl mit im wesentlichen der räumlichen Intensitätsverteilung des Eingangsstrahls aufweist, welcher von dem gewünschten Schwellenintensitätsniveau abhängig ist.

8. Optische Schwellenverarbeitungsvorrichtung nach Anspruch 3, welche des weiteren aufweist:
ein Mittel zum Aufsplitten des Histogrammstrahls (40) in einen ersten und einen zweiten Strahl (44, 72), welche die positionale Verteilung des Histogrammstrahls (40) beibehalten.

9. Optische Schwellenverarbeitungsvorrichtung nach Anspruch 8, wobei das Signalverarbeitungsmittel das gewünschte Intensitätsschwellenniveau aus den vom Detektor (46) erhaltenen Signalen bestimmt, indem es die ursprüngliche optische Strahlintensitätsverteilung daraus erzeugt, den algebraischen Mittelwert und die Varianz der Intensitätsverteilung errechnet, das gewünschte Schwellenintensitätsniveau auf ein vorgegebenens Mehrfaches von Varianzen einstellt, die gewünschte Intensitätsschwelle in eine entsprechende positionale Schwelle im Histogrammstrahl umformt, und ein schwellenspezifisches Ausgangssignal erzeugt, welches die positionale Schwelle darstellt.

10. Optische Schwellenverarbeitungsvorrichtung nach Anspruch 8, wobei das Mittel zum Aufsplitten einen Strahlsplitter (42) aufweist, welcher so positioniert ist, daß er den Histogrammstrahl (40) in einen ersten und zweiten Teilstrahl (44, 72) aufspaltet.

11. Optische Schwellenverarbeitungsvorrichtung nach einem der vorhergehenden Ansprüche, welcher des weiteren eine Linse (16) aufweist zur Rückumformung des mit einem positionalen Schwellenwert verarbeiteten Ausgangsstrahls (70) in einen einer Intensitätsschwelle entsprechenden, zweidimensionalen Ausgangsstrahl (74).

12. Verfahren zur Schwellenverarbeitung optischer Strahlintensitäten, um einige Intensitäten zu blockieren und wiedere andere durchzulassen in einem Histogrammlichtstrahl (40, 44, 72), welcher durch eine eindimensionale Umformung aus einem ursprünglichen Strahl erhalten wird, welcher in unterschiedlichen Einheitsflächen seines Querschnitts unterschiedliche Intensitätsniveaus aufweist, wobei der Histogrammlichtstrahl (40, 44, 72) eine Querschnittsintensitätsverteilung aufweist, bei der die Position einem Intensitätsniveau im ursprünglichen optischen Strahl entspricht, und in dem die Intensität an einer gegebenen Position der Anzahl von Einheitsflächen mit dem gleichen Intensitätsniveau im ursprünglichen Strahl entspricht, welches die folgenden Schritte aufweist:
Aufsplitten des Histogrammstrahls (40) in einen ersten und einen zweiten Strahl (44, 72);
Ausrichten des ersten Strahls (44) auf einen optischen Strahldetektor (46) und des zweiten Strahls (44) auf einen optischen Reflektor (68);
Erfassen des ersten Strahls (44) und Erzeugen daraus einer Reihe von elektrischen Signalen mit elektrischen Intensitäten, welche direkt proportional zu den optischen Positionsintensitäten des ersten Strahls (44) sind und an einen Signalprozessor geleitet werden sollen (50);
Verarbeiten der Reihe von elektrischen Signalen, um daraus die Intensitätsverteilung des ursprünglichen optischen Strahls zu bestimmen, Errechnen eines gewünschten Intensitätsschwellenniveaus aus der Intensitätsverteilung auf der Basis von vorgegebenen Parametern, Umwandeln der gewünschten Intensitätsschwelle in eine entsprechende positionale Schwelle im Histogrammstrahl, und Erzeugen eines schwellenspezifischen Ausgangssignals, welches die positionale Schwelle darstellt; und
optisches Reflektieren des zweiten Strahls (72), und Einstellen der optischen Reflektion als Antwort auf das vom Signalprozessor (50) erhaltene elektrische Signal, um nur diejenigen Histogrammstrahlpositionen zu reflektieren, welche der Intensitätsverteilung des ursprünglichen Strahls entsprechen und größer als das positionale Schwellenniveau sind, und alle anderen Histogrammpositionen zu blockieren.

13. Verfahren nach Anspruch 12, wobei von dem optischen Reflektor reflektiertes Licht im wesentlichen ohne Veränderung den Strahlsplitter (42) durchläuft und zu einer Fokussierlinse weiterläuft.

14. Verfahren nach Anspruch 12, wobei das Intensitätsschwellenniveau während des Signalverarbeitungsschrittes durch Multiplikation einer voreingestellten, reellen Zahl-Variablen mit der errechneten Varianz und Hinzuaddieren des Produkts zu einer voreingestellten Ausgangspunktvariablen bestimmt wird.

15. Verfahren nach Anspruch 14, wobei die Ausgangspositionsvariable ein ausgewähltes Niveau der Intensitätsverteilung darstellt.

16. Verfahren nach Anspruch 15, wobei sowohl das Schwellenintensitätsniveau als auch die vorgegebene reelle Zahl zeitvariabel sind.

## Revendications

1. Appareil de seuillage optique destiné à soumettre à un seuil des intensités de faisceaux optiques afin d'éliminer en bloquant certaines intensités et de laisser passer d'autres intensités dans un faisceau lumineux d'histogramme (40, 44, 72) qui est dérivé par une transformée unidimensionnelle d'un faisceau d'origine ayant différents niveaux d'intensité dans différentes aires unitaires de sa section transversale, le faisceau lumineux d'histogramme (40, 44, 72) ayant une distribution d'intensité en section transversale dans laquelle la position est représentative d'un niveau d'intensité dans le faisceau optique original et dans laquelle l'intensité en une position donnée correspond au nombre d'aires unitaires dans le faisceau d'origine ayant le même niveau d'intensité, l'appareil comportant :
des moyens pour diviser le faisceau d'histogramme (40) en premier et second faisceaux (44, 72),
un détecteur (44) de faisceau optique destiné à recevoir ledit premier faisceau (44) et à générer à partir de celui-ci des signaux optiques proportionnels aux intensités optiques positionnelles dudit premier faisceau ;
des moyens de traitement (50) recevant lesdits signaux électriques pour
- déterminer à partir de ceux-ci la distribution de l'intensité du faisceau optique d'origine,
- calculer un niveau de seuil d'intensité souhaité pour ladite distribution d'intensité déterminée sur la base de paramètres prédéterminés,
- transformer ledit seuil d'intensité souhaité en le seuil positionnel correspondant pour le faisceau d'histogramme, et
- générer un signal de sortie à seuil spécifié représentant ledit seuil positionnel ;
des moyens électro-optiques (68) de traitement connectés auxdits moyens (50) de traitement, lesdits moyens électro-optiques (68) de traitement étant agencés pour recevoir ledit second faisceau (72) et réfléchir ledit second faisceau (72) en réponse audit signal de sortie à seuil spécifié, en un faisceau de sortie (70) dans lequel seules les positions du faisceau d'histogramme correspondant à la distribution d'intensité du faisceau optique d'origine, qui sont supérieures au niveau positionnel de seuil, sont réfléchies, et dans lequel toutes les autres positions de l'histogramme sont bloquées.

2. Appareil de seuillage optique selon la revendication 1, dans lequel les moyens électro-optiques de traitement comprennent une valve optique (68) qui est pilotée par le signal de sortie à seuil spécifié provenant des moyens de détection (14, 46, 50) pour délivrer en sortie uniquement les positions du faisceau d'histrogramme qui correspondent aux intensités du faisceau optique d'origine dépassant ladite intensité de seuil (58, 64).

3. Appareil de seuillage optique selon la revendication 1, dans lequel lesdits moyens de détection (14, 46, 50) comprennent la combinaison d'un détecteur (4b) qui détecte une partie du faisceau d'histogramme (44) et génère des signaux (48) représentant la distribution positionnelle dudit faisceau, et des moyens (50) de traitement de signaux connectés de façon à recevoir lesdits signaux générés (48) et à établir à partir de ceux-ci ledit seuil positionnel.

4. Appareil de seuillage optique selon la revendication 3, dans lequel lesdits moyens (50) de traitement de signaux comprennent un calculateur.

5. Appareil de seuillage optique selon la revendication 2, dans lequel ladite valve optique (68) comprend une valve optique à cristaux liquides et dispositif à couplage de charges.

6. Appareil selon la revendication 1, comportant en outre des moyens pour générer le faisceau lumineux d'histogramme, dans lequel lesdits moyens comprennent :
des moyens pour transformer le faisceau d'entrée (2) en un faisceau d'histogramme (40), ayant une distribution positionnelle qui correspond à la distribution d'intensité de l'histogramme du faisceau d'entrée (2).

7. Appareil selon la revendication 6, dans lequel lesdits moyens pour transformer le faisceau d'entrée (2) en un faisceau d'histogramme (40) comprennent un générateur (6) à conversion d'intensité en angle et une lentille (8) à transformation de Fourier, ledit appareil comportant en outre des moyens pour transformer ledit faisceau d'histogramme soumis à un seuil en un faisceau de sortie ayant sensiblement les distributions d'intensité spatiales du faisceau d'entrée soumis audit niveau d'intensité de seuil souhaité (58, 64).

8. Appareil de seuillage optique selon la revendication 3, comportant en outre :
des moyens destinés à diviser le faisceau d'histrogramme (40) en premier et second faisceaux (44, 72) qui conservent la distribution positionnelle du faisceau d'histogramme (40).

9. Appareil de seuillage optique selon la revendication 8, dans lequel les moyens de traitement des signaux déterminent le niveau de seuil d'intensité souhaité à partir des signaux reçus dudit détecteur (46) en générant à partir de ces signaux la distribution d'intensité du faisceau optique d'origine, en calculant la moyenne algébrique et la variance de ladite distribution d'intensité, en établissant le niveau d'intensité de seuil souhaité à un multiple prédéterminé de variances, en transformant ledit seuil d'intensité souhaité en un seuil positionnée correspondant dans le faisceau d'histogramme, et en générant un signal de sortie à seuil spécifié représentant ledit seuil positionnel.

10. Appareil de seuillage optique selon la revendication 8, dans lequel lesdits moyens de division comprennent un diviseur (42) de faisceau positionné pour diviser le faisceau d'histogramme (40) en premier et second faisceaux divisés (44, 72).

11. Appareil de seuillage optique selon l'une des revendications précédentes, comportant en outre une lentille (16) destinée à retransformer le faisceau de sortie (70) ayant été soumis à un seuil positionnel en un faisceau de sortie bidimensionnel (74) ayant été soumis à un seuil d'intensité.

12. Procédé de seuillage d'intensité de faisceau optique afin de bloquer certaines intensités et de laisser passer d'autres intensités dans un faisceau lumineux d'histogramme (40, 44, 72) qui est dérivé d'une transformée unidimensionnelle à partir d'un faisceau d'origine ayant différents niveaux d'intensités dans différentes aires unitaires de sa section transversale, le faisceau lumineux d'histogramme (40, 44, 72) ayant une distribution d'intensité en section transversale dans laquelle la position est représentative d'un niveau d'intensité dans le faisceau optique d'origine et dans laquelle l'intensité en une position donnée correspond au nombre d'aires unitaires dans le faisceau d'origine ayant le même niveau d'intensité, comprenant les étapes qui consistent :
à diviser ledit faisceau d'histrogramme (40) en premier et second faisceaux (44, 72) ;
à diriger ledit premier faisceau (44) sur un détecteur (46) de faisceau optique et ledit second faisceau (44) sur un réflecteur optique (68) ;
à détecter ledit premier faisceau (44) et à générer à partir de cette détection une série de signaux électriques ayant des intensités électriques directement proportionnelles aux intensités de position optique dudit premier faisceau (44) devant être appliqué à un processeur (50) de signaux ;
à traiter ladite série de signaux électriques pour en déterminer la distribution d'intensité de faisceau optique d'origine, à calculer un niveau de seuil d'intensité souhaité à partir de ladite distribution d'intensité sur la base de paramètres prédéterminés, à transformer ledit seuil d'intensité souhaité en un seuil positionnel correspondant dans le faisceau d'histrogramme, et à générer un signal de sortie à seuil spécifié représentant ledit seuil positionnel ; et
à réfléchir optiquement ledit second faisceau (72) et à ajuster ladite réflexion optique en réponse au signal électrique reçu du processeur (50) de signaux afin de ne réfléchir que les positions du faisceau d'histogramme correspondant à la distribution d'intensité du faisceau optique d'origine, qui sont supérieures au niveau positionnel de seuil, et de bloquer toutes les autres positions d'histogramme.

13. Procédé selon la revendication 12, dans lequel la lumière revenant par réflexion du réflecteur optique passe à travers le diviseur (42) de faisceau pratiquement sans modification et continue jusqu'à une lentille (16) de focalisation.

14. Procédé selon la revendication 12, dans lequel le niveau de seuil d'intensité est déterminé durant l'étape de traitement de signaux par multiplication d'une variable pré-établie constituée d'un nombre réel avec la variante calculée et addition du produit à une variable de position de départ pré-établie.

15. Procédé selon la revendication 14, dans lequel ladite variable de position de départ est un niveau désigné de la distribution d'intensité.

16. Procédé selon la revendication 15, dans lequel le niveau d'intensité de seuil et le nombre réel pré-établi varient tous deux avec le temps.
